# FASCICULE DE BREVET EUROPEEN

(11) **EP 3 596 533 B1**
(45) Date de publication et mention de la délivrance du brevet: **22.09.2021**
(21) Numéro de dépôt: 18712989.5
(22) Date de dépôt: 12.03.2018
(51) Int. Cl.: G02B 27/01, H04N 13/31, H04N 13/363, H04N 13/346

(54) **DISPOSITIF DE PROJECTION AÉRIENNE ET DÉMATÉRIALISÉE D'UNE IMAGE NUMÉRIQUE OU D'UNE SÉQUENCE D'IMAGES NUMÉRIQUES, EN PARTICULIER D'UNE IMAGE AUTO-STÉRÉOSCOPIQUE OU D'UNE SÉQUENCE D'IMAGES AUTO-STÉRÉOSCOPIQUES**
VORRICHTUNG ZUR ENTMATERIALISIERTEN LUFTPROJEKTION EINES DIGITALEN BILDES ODER EINER SEQUENZ DIGITALER BILDER, INSBESONDERE EINES AUTOSTEREOSKOPISCHEN BILDES ODER EINER SEQUENZ VON AUTOSTEREOSKOPISCHEN BILDERN
DEVICE FOR THE DEMATERIALISED AERIAL PROJECTION OF A DIGITAL IMAGE OR A SEQUENCE OF DIGITAL IMAGES, IN PARTICULAR AN AUTO-STEREOSCOPIC IMAGE OR A SEQUENCE OF AUTO-STEREOSCOPIC IMAGES

(30) Priorité: 17.03.2017 FR 1752245
(43) Date de publication de la demande: 22.01.2020
(73) Titulaire: Alioscopy, 75020 Paris (FR)
(72) Inventeur: ALLIO, Pierre, 75020 Paris (FR)
(74) Mandataire: Bringer IP
(86) Numéro de dépôt international: PCT/FR2018/050563
(87) Numéro de publication internationale: WO 2018/167410

(56) Documents cités:
- US-A- 2 576 147
- US-A- 3 096 389
- US-A- 5 311 357
- US-A- 6 003 995
- US-A1- 2002 022 940
- US-A1- 2007 058 144
- US-A1- 2007 097 319
- US-A1- 2010 066 978
- US-B1- 6 292 305
- US-B1- 6 421 174
- US-B1- 6 817 716

## Description

### 1. Domaine technique de l'invention

L'invention concerne un dispositif de projection aérienne et dématérialisée d'une image ou d'une séquence d'images. L'invention concerne également un dispositif de projection aérienne et dématérialisée d'une image auto-stéréoscopique ou d'une séquence d'images auto-stéréoscopiques formant un contenu vidéo.

### 2. Arrière-plan technologique

Un dispositif de projection aérienne et dématérialisée d'un objet est un dispositif qui permet de projeter une image de l'objet en avant d'une fenêtre pratiquée dans un boitier et qui donne à l'observateur l'illusion d'un objet tridimensionnel qui flotte dans l'espace.

Un tel dispositif est connu pour la projection d'objets réels. Un tel dispositif comprend typiquement un boitier (opaque ou non) dans lequel est ménagée une ouverture destinée à former une fenêtre d'observation de l'image dématérialisée, un système optique, en général une lentille de Fresnel ou une lentille ou ensemble de lentilles ou un miroir concave, et un objet agencé à distance du système optique qui est configuré pour orienter l'image de l'objet vers la fenêtre d'observation.

Par exemple, le document US6817716 décrit un tel dispositif comprenant un compartiment inférieur dans lequel un objet réel est éclairé par une source de lumière, un compartiment supérieur comprenant une fenêtre d'observation ménagée en face avant, un miroir concave et un miroir plan semi-réfléchissant incliné à 45 degrés sur l'axe optique du miroir concave sur lequel est centré la fenêtre d'observation, ledit miroir semi-réfléchissant étant agencé entre la fenêtre d'observation et le miroir concave au droit de l'objet réel. Ainsi, l'image de l'objet est réfléchie partiellement par le miroir semi-réfléchissant incliné à 45 degrés en direction du miroir concave qui renvoie l'image vers le miroir semi-réfléchissant qui laisse passer une partie de l'image vers la fenêtre d'observation. L'observateur a alors l'impression de voir l'objet réel flotter en avant de la fenêtre d'observation.

Le document US2007/053144 décrit un dispositif ce projection d'une image 3D dématérialisée comprenant un boitier comprenant une ouverture, un écran d'affichage d'une image agencé dans le boitier, et un miroir sphérique agencé de manière à pouvoir réfléchir l'image de l'écran à travers l'ouverture. Le document US 2007/097319 divulgue un système d'affichage autostéréoscopique avec un point de vue comprenant un projecteur, un miroir semi-réfléchissant, un miroir concave et un capteur de détection et de reconnaissance de mouvements.

L'un des problèmes de cette solution, si on remplace l'objet réel par une image numérique, est qu'une partie de l'image réfléchie par le miroir concave est également réfléchie par le miroir semi-réfléchissant vers la source. Cette image retour n'a que rarement d'incidence dans le cas d'un objet réel car elle est tridimensionnelle et à l'envers de sorte qu'elle éclaire l'objet en retour sans en altérer l'aspect et les détails. En effet, l'objet réel est un objet en 3 dimensions et est très fortement éclairé directement ce qui rend l'image réfléchie peut destructrice. En d'autres termes, dans le cas d'un objet réel, l'image retour constitue au plus (à de rares exceptions près, par exemple : le cadran d'une montre) un éclairage additionnel de l'objet réel, ce qui ne perturbe pas le fonctionnement du dispositif. En revanche, si à la place d'un objet réel, on place un écran plan d'affichage d'une image numérique pour être perçu à l'échelle 1, l'image retour interfère avec l'image source car elle se forme exactement au même niveau et avec une netteté maximum à la surface dudit écran, de sorte que l'image projetée est fortement dégradée. L'une des solutions possibles pour contrer ce phénomène pourrait être de rapprocher l'écran d'affichage de l'image numérique à projeter du système optique pour obtenir un effet de grossissement de l'image projetée parce qu'elle est projetée plus loin vers l'observateur et par conséquent dé-focaliser l'image retour de sorte qu'elle soit diffuse et n'interfère donc plus avec l'image d'origine n'étant plus sur le même plan, mais très en arrière. En revanche, le rapprochement de l'écran d'affichage du miroir concave dégrade la qualité de l'image en lui donnant une apparence très bombée liée à la perspective conique utilisée loin des conditions de conjugaison du plan objet avec le plan image à l'échelle 1.

Les inventeurs ont cherché à améliorer les dispositifs connus et à adapter la technique de projection aérienne et dématérialisée d'un objet réel aux images numériques, et en particulier aux images auto stéréoscopiques.

Une image auto-stéréoscopique est constituée d'une pluralité d'images élémentaires imbriquées correspondant chacune à un point de vue différent d'un objet ou d'une scène. La visualisation d'une image auto stéréoscopique implique l'utilisation d'un dispositif optique sélecteur, du type réseau de lenticules cylindriques, agencé devant l'écran d'affichage auto stéréoscopique. Ce dispositif optique sélecteur permet de faire en sorte que les yeux de l'observateur ne perçoivent que deux images élémentaires respectives correspondants à deux points de vue différents, ce qui donne une illusion de volume stéréoscopique 3D en jaillissement et en profondeur.

### 3. Objectifs de l'invention

L'invention vise à fournir un dispositif de projection aérienne et dématérialisée d'une image numérique qui pallie au moins certains des inconvénients des solutions connues.

L'invention vise aussi à fournir un tel dispositif qui soit adapté à une image auto stéréoscopique ou à une séquence d'images autostéréoscopiques.

L'invention vise aussi à fournir, dans au moins un mode de réalisation, un dispositif de projection aérienne et dématérialisée d'une image numérique, notamment auto stéréoscopique, qui améliore le confort visuel de l'observateur.

L'invention vise aussi à fournir, dans au moins un mode de réalisation, un dispositif de projection aérienne et dématérialisée d'une image numérique, notamment auto stéréoscopique, qui soit compact.

L'invention vise aussi à fournir, dans au moins un mode de réalisation, un dispositif de projection aérienne et dématérialisée d'une image numérique, notamment auto stéréoscopique, qui permet une interaction de l'observateur avec l'image dématérialisée.

L'invention vise aussi à fournir, dans au moins un mode de réalisation, un dispositif de projection aérienne et dématérialisée d'une image numérique, notamment auto stéréoscopique, qui soit utilisable dans tous types d'industrie, en particulier dans le domaine médical, automobile, aéronautique, ferroviaire, publicitaire, les musées, l'éducation et la formation etc.

L'invention vise aussi à fournir, dans au moins un mode de réalisation, un dispositif clôt de projection aérienne et dématérialisée d'une image numérique permettant de voir l'image sans la possibilité d'avoir accès aux composants du dispositif et sans les reflets multiples occasionnés par la présence d'une vitre perpendiculaire à l'axe optique principale de sortie.

### 4. Exposé de l'invention

Pour ce faire, l'invention concerne un dispositif de projection aérienne et dématérialisée d'une image numérique autostéréoscopique comprenant :
- un boitier comprenant une paroi avant, une paroi arrière, reliées l'une à l'autre au moins par une paroi supérieure et une paroi inférieure, ladite paroi avant comprenant une ouverture formant une fenêtre d'observation de ladite image numérique autostéréoscopique projetée,
- un système optique comprenant au moins un miroir sphérique concave présentant un axe optique, une focale F, un centre de rayon de courbure C situé sur ledit axe optique, ledit système optique étant agencé dans ledit boitier de sorte qu'il puisse orienter au moins une partie de la lumière incidente reçue vers ladite fenêtre d'observation pour y former une image dématérialisée et flottante de l'image numérique,
- un écran d'affichage d'images autostéréoscopiques à N points de vues surmonté d'un réseau de lenticules cylindriques formant un composant optique sélecteur des points de vues de ladite image numérique autostéréoscopique à projeter, logé dans ledit boitier en regard dudit miroir sphérique à une distance sensiblement égale au double de la focale F, et écarté dudit axe optique dudit miroir sphérique, perpendiculairement à cet axe optique d'une distance au moins égale à la demie-hauteur de l'écran d'affichage, ladite hauteur étant définie selon l'axe perpendiculaire audit axe optique.

Un dispositif selon l'invention permet la projection dématérialisée à travers une fenêtre d'observation ménagée dans un boitier d'une image numérique affichée sur un écran d'affichage logé dans le boitier. Selon l'invention, l'écran d'affichage est décalé par rapport à l'axe optique du miroir sphérique d'une distance au moins égale à la demie-hauteur de l'écran d'affichage, pour éviter que l'image réfléchie par le miroir sphérique ne vienne interagir avec l'image d'origine affichée sur l'écran d'affichage. Cette image réfléchie par le miroir sphérique peut soit être directement visualisée par l'observateur en ménageant la fenêtre d'observation en regard de cette image retour, auquel cas l'image réfléchie par le miroir sphérique forme l'image dématérialisée, soit subir une ou plusieurs réflexions additionnelles par un ou plusieurs miroirs, tels que des miroirs semi-réfléchissants, et en ménageant la fenêtre d'observation en regard de l'image réfléchie par le dernier composant optique sur le chemin optique ainsi formé par les miroirs semi-réfléchissants.

L'écran d'affichage étant logé dans le boitier à une distance sensiblement égale au double de la focale F du miroir sphérique, au même niveau que le centre du miroir concave, l'image projetée au niveau de la fenêtre d'observation est inversée à l'échelle 1. L'image projetée étant à l'échelle 1, elle garde la qualité de l'image source, sans présenter de grandissement, ce qui minimise les déformations géométriques de la perspective conique introduite par l'optique de projection.

Selon le type d'image à projeter, l'écran peut avantageusement être pivoté de 180 degrés pour que l'image projetée soit à l'endroit pour l'observateur.

En outre, l'écran d'affichage est un écran d'affichage d'images autostéréoscopiques à N points de vues surmonté d'un réseau de lenticules cylindriques formant un composant optique sélecteur des points de vues de l'image.

Cet aspect de l'invention permet de projeter des images en relief aériennes et flottantes qui jaillissent de la fenêtre d'observation. Contrairement à la projection de l'image tridimensionnelle d'un objet réel qui se trouve affectée d'un grandissement perspectif conique important, l'image tridimensionnelle reste équivalente à celle que l'on percevrait en vision directe sans grandissement exagéré. En effet, le relief est dû à la vision binoculaire mais les images auto stéréoscopiques sont plates et coplanaires.

Selon une première variante de l'invention, ledit miroir sphérique est agencé au niveau de la paroi arrière du boitier, et ledit écran est agencé au niveau de ladite fenêtre d'observation ménagée dans ladite paroi avant dudit boitier, en symétrie de ladite fenêtre d'observation par rapport à l'axe optique dudit miroir sphérique, de sorte que l'image de l'écran réfléchie par ledit miroir sphérique forme directement l'image flottante et dématérialisée de l'image au niveau de la fenêtre d'observation. L'image est bien dématérialisée et flottante mais se situe dans la fenêtre d'observation.

Selon une deuxième variante de l'invention, ledit miroir sphérique est agencé au niveau de ladite paroi supérieure dudit boitier, ledit écran est agencé au niveau de ladite paroi inférieure dudit boitier, ledit système optique comprend en outre un miroir semi-réfléchissant agencé incliné sur le chemin optique reliant ledit écran et ledit miroir sphérique au niveau de la fenêtre d'observation de sorte que l'image affichée par ledit écran apparaît, après une transmission par le miroir semi-réfléchissant, une réflexion sur le miroir sphérique et une réflexion sur le miroir semi-réfléchissant, dématérialisée et flottante à travers la fenêtre d'observation pour un observateur.

Selon cette variante, le miroir semi-réfléchissant ou semi-transparent présente avantageusement une face arrière anti reflet et une face avant partiellement réfléchissante pour éviter l'effet d'une double réflexion sur les deux faces du verre. Ainsi, le miroir semi-réfléchissant est transparent en transmission par l'arrière, mais il réfléchit une partie du rayonnement en face avant. Dès lors, en inclinant le miroir semi-transparent suivant un angle de l'ordre de 45° sur le chemin optique entre l'écran d'affichage et le miroir sphérique, une partie de la lumière issue de l'image source de l'écran traverse le miroir plan semi-transparent sans être déviée (une partie est réfléchie vers l'intérieur en se perdant vers l'arrière), puis vient frapper la surface du miroir sphérique, est réfléchie, puis rebondit sur la face réfléchissante du miroir semi-transparent et une partie de la lumière est donc déviée vers la fenêtre d'observation pour former l'image aérienne et dématérialisée de l'image source en avant de la fenêtre. Cette image est à l'endroit si l'écran est placé à l'envers dans le boitier. L'autre partie des rayons lumineux traverse en ligne droite le miroir semi-réfléchissant, comme s'il n'existait pas, pour venir former une image de l'écran en symétrie de l'écran, mais à l'envers. L'écran étant décalé suivant la direction perpendiculaire à l'axe optique du miroir sphérique, cette image en symétrie n'interagit pas avec l'écran d'affichage, et la qualité de l'image est préservée.

Cette architecture du dispositif selon la deuxième variante avec le miroir sphérique, la fenêtre d'observation et l'écran agencés respectivement au niveau des parois supérieure, avant et inférieure, et la présence d'un miroir semi-réfléchissant sur le chemin optique, permet d'éviter que la lumière venant de l'extérieur par la fenêtre d'observation ne vienne, après réflexion sur le miroir concave, perturber l'image aérienne formée par le dispositif. En effet, la présence du miroir semi-réfléchissant incliné à 45° sur le chemin optique entre la fenêtre d'observation et le miroir concave, assure que seule une partie du rayonnement venant de l'extérieur atteint le miroir concave. Ce dernier réfléchit également ce rayonnement dont seule une partie est à son tour transmis vers la fenêtre d'observation. En d'autres termes, l'image de l'environnement réfléchie par le miroir concave, lorsque ce dernier est agencé suivant l'architecture de cette deuxième variante, apparaît très sombre au niveau de la fenêtre d'observation et ne perturbe donc pas l'image aérienne et dématérialisée formée par le dispositif.

Selon une variante de l'invention, la paroi arrière du boitier est transparente ou présente une ouverture sur l'extérieur de sorte que l'observateur puisse, par transparence, visualiser des éléments réels en arrière plan ou affichés virtuellement sur un écran plat ou auto stéréoscopique, en combinaison avec l'image jaillissante de la fenêtre d'observation.

Avantageusement et selon l'invention, ledit miroir sphérique est pivoté autour dudit centre du rayon de courbure C d'un angle prédéterminé et ledit écran d'affichage est incliné par rapport au miroir sphérique de telle sorte que la normale au centre de l'écran est perpendiculaire au plan tangent dudit miroir sphérique, de manière à compenser un effet de trapèze de l'image projetée introduit par le décalage dudit écran d'affichage par rapport à l'axe optique du miroir sphérique.

Selon cet aspect de l'invention, un effet de trapèze introduit par le décalage de l'écran par rapport à l'axe optique du miroir sphérique est compensé en inclinant l'écran pour qu'il épouse au mieux une courbure symétrique à celle du miroir sphérique agencé en regard.

En pratique, l'écran d'affichage présente une extrémité distale correspondant au bas de l'image affichée et située vers la paroi arrière du boitier, et une extrémité proximale correspondant au haut de l'image affichée et située vers la paroi avant du boitier. L'écran est incliné de sorte que ladite extrémité distale de l'écran d'affichage soit surélevée par rapport à ladite extrémité proximale de manière à compenser l'effet de trapèze de l'image projetée introduit par le décalage dudit écran d'affichage par rapport à l'axe optique du miroir sphérique.

En outre, le miroir sphérique est pivoté autour du centre du rayon de courbure C d'un angle prédéterminé. Autrement dit, le miroir est avancé vers la paroi avant du boitier selon le plan de sa courbure, ce qui permet de recentrer l'image par rapport à la pupille d'observation et à la fenêtre d'observation. La fenêtre d'observation est constituée par l'ouverture pratiquée en face avant du dispositif et la pupille d'observation est constituée par le reflet du miroir concave dans le miroir semi transparent à 45° perçu comme s'il était disposé verticalement au fond du dispositif en regard de la fenêtre. Bien que la pupille soit en arrière et l'image aérienne en avant, cette dernière disparaît dès que l'œil de l'observateur ne voit plus la pupille en arrière de l'image flottante. Ainsi, le reflet du miroir se comporte bien comme une pupille d'observation. Plus le miroir est grand au regard de sa focale et plus l'observation hors axe principal est facilitée. Il devient possible de s'écarter de l'axe central sans voir disparaître l'image flottante. La difficulté réside dans la réalisation de miroir très ouvert, c'est-à-dire avec un diamètre le plus large possible et une focale la plus courte possible.

Avantageusement et selon l'invention, le dispositif comprend un dispositif de pré-compensation des distorsions de l'image plate affichée par ledit écran d'affichage de sorte que l'image projetée, après réflexion par ledit miroir sphérique qui forme un dispositif optique convergent, retrouve une géométrie conforme à la géométrie originale de l'image auto stéréoscopique.

Les distorsions sont la courbure sphérique du plan de l'image (peu gênant en général, il peut faire l'objet d'une légère correction grâce à l'aspect tridimensionnel de l'image affichée. On simule une courbure inverse du plan image pour le compenser). Pour les autres déformations en x et en y, la distorsion en ballon des lignes droites plus on s'éloigne de l'axe du miroir concave (le bas de l'image est relativement déformé alors que le haut de l'image ne l'est pas), la solution procède du traitement d'images.

Avantageusement et selon cet aspect de l'invention, ladite image projetée s'étendant dans un repère prédéterminé d'axes x, y, z, ledit dispositif de compensation est formé, dans la direction de l'axe z, par ledit réseau de lenticules cylindriques dudit écran d'affichage d'images autostéréoscopiques dans lequel un pas dudit réseau a été réduit par rapport au pas optimal permettant une observation à une distance nominale prédéterminée desdits images auto stéréoscopiques en l'absence du miroir sphérique.

L'utilisation d'un écran d'affichage d'une image auto stéréoscopique en lieu et place d'un écran d'affichage d'une image plate génère des difficultés additionnelles du fait de la présence du miroir sphérique concave qui modifie le rapport de pas entre le réseau lenticulaire et le pas de l'écran et soumet l'ensemble aux lois de perspective conique. En effet, on détermine le pas d'un réseau lenticulaire pour une distance d'observation idéale choisie en déterminant le pas dudit réseau en tenant compte de sa focale (distance des centres optiques des micros lentilles à la surface de l'écran, et du pas dudit écran. Selon une position idéale théorique d'un œil placé à la distance voulue, on lance des rayons qui doivent passer par chaque centre optique des micros lentilles pour viser les points de l'écran modulo N (N étant le nombre de points de vue choisi). Les effets de la perspective conique générée par la présence du système optique de projection, modifie le pas apparent du réseau lenticulaire en l'agrandissant un peu par rapport au pas de l'écran. L'alignement souhaité n'est plus possible, l'ensemble produira un grand nombre de moirés incompatible avec le résultat souhaité. Pour corriger la distorsion du pas apparent du réseau lenticulaire du dispositif auto stéréoscopique, une première solution est de dévier les rayons lumineux issus de l'écran vu au travers les micros lentilles au niveau de l'écran par un dispositif optique réfractant de même focale que le miroir pour renvoyer les rayons parallèles à l'infini après le miroir concave (dans ce cas, il faut des lentilles suffisamment grandes pour couvrir toute la surface de l'écran et de focale suffisamment courte pour compenser les effets du miroir). En pratique, il est difficile de réaliser cela avec des lentilles standards parce qu'elles seraient alors trop épaisses pour pouvoir être intégrées dans un boitier compact. En revanche, un ensemble de lentilles de Fresnel pourrait, grâce à leur très faible épaisseur, être combinée pour y parvenir. Cela étant, les lignes concentriques de lentilles de Fresnel moirent avec les lignes des lentilles du réseau lenticulaire de l'écran auto stéréoscopique et les surfaces lisses et réfléchissantes occasionnent de très nombreuses réflexions dans ce dispositif totalement optique. Cette solution pour former un dispositif de pré-compensation est donc en pratique difficile à mettre en œuvre, quand bien même elle permet de compenser les effets de la perspective conique, la courbure de champs et le changement de grandissement différentiel entre le pas de réseau et le pas de perçage (pitch) de l'écran considéré.

Une autre solution avantageuse est de calculer un nouveau pas de réseau lenticulaire appliqué à l'écran auto stéréoscopique. Bien que la focale du réseau lenticulaire soit très petite (sa distance à l'écran est en moyenne de 1mm), le fait d'être utilisé dans le cadre de la perspective conique, le grandissement différentiel du réseau lenticulaire et de l'écran ne se corresponde plus. Le dixième de micron de précision (voire moins) est d'ordinaire nécessaire au réglage de la distance d'usage de ces écrans. Les calculs faits pour la fabrication de ces composants optiques prennent en compte la taille des sous-pixels des écrans, la focale des microlentilles (distances des centres optiques à la surface de l'écran), la distance théorique idéale d'observation, le nombre de points de vue et les conditions de bases stéréoscopiques choisies pour l'application.

En d'autres termes, selon cet aspect de l'invention, le dispositif de pré-compensation est formé par ledit réseau de lenticules cylindriques dudit écran d'affichage d'images autostéréoscopiques pour lequel le pas est réduit par rapport au pas optimal permettant une observation à une distance nominale prédéterminée desdits images autostéréoscopiques en l'absence du miroir sphérique.

Avantageusement et selon cet aspect de l'invention, ladite image projetée s'étendant dans un repère prédéterminé d'axes x, y, z, ladite image numérique affichée sur ledit écran d'affichage auto stéréoscopique est également pré-déformée pour compenser les déformations géométriques en x et en y de l'image projetée liées au décalage dudit écran d'affichage par rapport à l'axe optique dudit miroir sphérique et à la présence d'un miroir sphérique concave formant un système optique soumis aux règles de la perspective conique.

Cette pré-déformation numérique des images combinée à la pré-compensation conique du réseau lenticulaires permet d'obtenir une image projetée qui retrouve ses dimensions originales dans les 3 dimensions.

Avantageusement et selon l'invention, le dispositif comprend en outre au moins un capteur de détection et de reconnaissance de mouvements d'un observateur monté sur ladite paroi avant ou supérieure dudit boitier au voisinage de ladite fenêtre d'observation et une unité de traitement reliée audit capteur et/ou audit écran d'affichage de sorte que des mouvements de l'observateur permettent la commande de l'écran d'affichage pour modifier l'image projetée, donnant ainsi à l'observateur l'illusion de manipuler ladite image projetée et/ou permettent la commande d'équipements annexes reliés à l'unité de traitement, ladite image aérienne et dématérialisée formant ainsi une interface de commande de ces équipements annexes.

Selon cet aspect de l'invention, le dispositif comprend un capteur de détection de mouvement calibrée par rapport à l'écran de manière à ce que les mouvements de l'observateur devant ce capteur donnent le sentiment d'interagir avec l'image dématérialisée.

Par exemple, dans le cas d'une projection d'une image auto stéréoscopique, le détecteur de mouvement peut être configuré pour que l'observateur fasse tourner l'image projetée comme s'il s'agissait d'un objet réel, par exemple en affichant successivement les différents points de vue de l'image.

Le capteur de détection et de reconnaissance de mouvements permet aussi à l'observateur, selon certains modes de réalisation, de commander des équipements annexes reliés à l'unité de traitement. Ainsi, l'image aérienne et dématérialisée projetée forme une interface de commande de ces équipements annexes.

Cet aspect de l'invention présente une multitude d'applications dans une multitude de domaines techniques, notamment en médicine, dans l'automobile, l'aéronautique, la muséographie, etc.

En effet, il est possible avec un dispositif selon cet aspect de l'invention d'établir une interface virtuelle de tout ce qui se trouve dans le cockpit d'un avion, l'habitacle d'une voiture, etc., et de commander ainsi l'ensemble des équipements à commandes numériques par une interaction avec l'image virtuelle en relief projetée par le dispositif selon l'invention.

Dans un musée, les visiteurs pourront manier sans risque des représentations d'objets rares et précieux et pourront accéder à de nombreuses informations de façon ludiques, interactives et efficaces.

Dans le domaine du luxe, il devient possible d'afficher en très haute résolution des images d'objets précieux, rares, voir uniques et de permettre aux clients et curieux d'en découvrir toutes les qualités sans prendre aucun risque et en optimisant l'illusion de la présence réelle de l'objet.

L'effet de jaillissement produit par un dispositif selon l'invention, dans le cadre d'une image auto-stéréoscopique, permet également de présenter un objet à l'extérieur d'une vitrine, à quelques centimètres de la vitrine, en donnant ainsi la sensation de pouvoir prendre l'objet dans sa main et d'interagir avec lui.

Avantageusement et selon l'invention, ledit écran d'affichage est configuré pour pouvoir afficher une séquence d'images numériques formant un contenu vidéo.

Avantageusement et selon l'invention, au moins une image numérique est une image destinée à une application médicale, automobile, ferroviaire aéronautique, publicitaire, etc.

Avantageusement et selon l'invention, le dispositif comprend en outre une vitre antireflet s'étendant dans ladite fenêtre d'observation. En variante ou en combinaison cette vitre antireflet est configurée pour former une vitre de protection, anti effraction, par exemple dans le cadre de l'utilisation d'une dispositif selon l'invention dans une bijouterie.

L'invention concerne également un dispositif de projection aérienne et dématérialisée d'une image numérique ; notamment auto-stéréoscopique, caractérisés en combinaison par tout ou partie des caractéristiques mentionnées cidessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'un dispositif selon un premier mode de réalisation de l'invention,
- la figure 2 est une vue schématique en coupe d'un dispositif selon un deuxième mode de réalisation de l'invention.

### 6. Description détaillée de modes de réalisation de l'invention

Sur les figures, les échelles et les proportions ne sont pas strictement respectées et ce, à des fins d'illustration et de clarté.

Les éléments identiques, similaires ou analogues sont désignés par les mêmes références dans toutes les figures.

Les modes de réalisation décrits en lien avec les figures concernent l'affichage d'une image auto-stéréoscopique, étant entendu qu'ils peuvent également être mis en œuvre pour l'affichage d'une image numérique non autostéréoscopique.

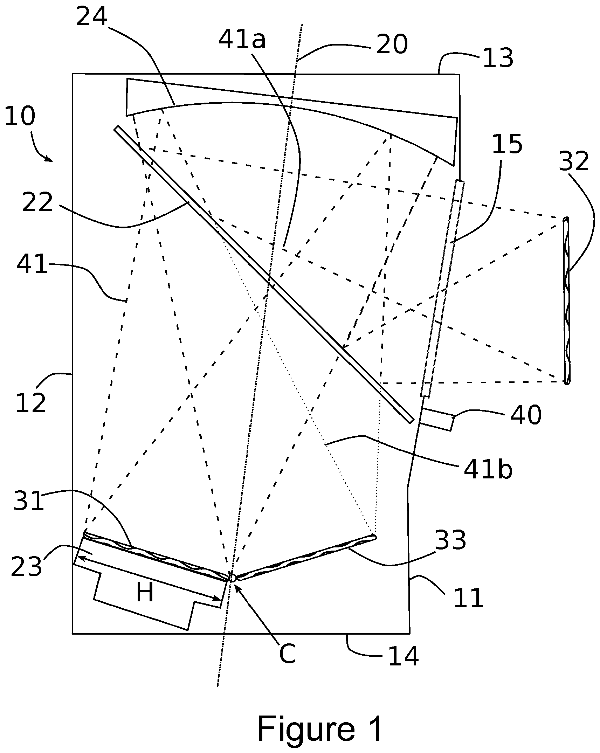

Tel que représenté sur la figure 1, le dispositif comprend un boitier 10, par exemple un boitier opaque comprenant une paroi avant 11, une paroi arrière 12, reliées l'une à l'autre par une paroi supérieure 13 et une paroi inférieure 14, ainsi que des parois latérales non visibles sur la vue en coupe de la figure 1.

Dans toute la suite, le dispositif est décrit tel qu'il est lorsque la paroi inférieure 14 s'étend dans un plan horizontal. Aussi, sur la figure 1, la paroi arrière 12 s'étend suivant la verticale, donnée par la direction de la gravité.

La paroi avant 11 comprend une ouverture formant une fenêtre d'observation 15. Cette fenêtre d'observation 15 est de préférence formée d'une vitre anti-reflet inclinée (de l'ordre de 80° par rapport à l'horizontale).

Selon un mode de réalisation non représenté sur les figures, la paroi arrière du boitier peut être transparente ou présenter une ouverture sur l'extérieur de sorte que l'observateur puisse, par transparence, visualiser des éléments réels en arrière plan ou affichés virtuellement sur un écran plat ou auto stéréoscopique, en combinaison avec l'image jaillissante de la fenêtre d'observation.

Le dispositif selon l'invention comprend également un écran 23 d'affichage d'une image auto-stéréoscopique à projeter. Cet écran 23 est un écran d'affichage d'images auto-stéréoscopiques à N points de vues surmonté d'un réseau de lenticules cylindriques formant un composant optique sélecteur des points de vues de l'image. Cet écran est par exemple un écran ALIOSCOPY® tel que décrit dans le brevet FR2995713 au nom du demandeur. Cet écran peut être monté dans le boitier par tous types de moyens, collage, vissage, blocage mécanique, etc.

Le dispositif comprend également un système optique comprenant un miroir sphérique 24 concave d'axe optique 20, de focale F, et de centre de rayon de courbure C situé sur ledit axe optique 20. Il comprend également un miroir semi-réfléchissant 22 agencé incliné sur le chemin optique reliant ledit écran 23 et ledit miroir sphérique 24 au niveau de la fenêtre d'observation 15 de sorte que l'image 31 affichée par l'écran 23 apparaît, après une transmission par le miroir semi-réfléchissant 22, une réflexion sur le miroir sphérique 24 et une réflexion sur le miroir semi-réfléchissant 22, dématérialisée et flottante à travers la fenêtre d'observation 15 pour un observateur. Le miroir sphérique peut être monté dans le boitier par tous types de moyens, collage, blocage mécanique, etc.

Selon l'invention, l'écran 23 est agencé en regard du miroir sphérique 24 à une distance sensiblement égale au double de la focale F du miroir sphérique 24, c'est à dire à une distance de l'ordre de deux fois la distance focale F.

En outre, l'écran 23 est décalé par rapport à l'axe optique 20, perpendiculairement à cet axe optique 20 d'une distance au moins égale à la demie-hauteur H/2 de l'écran d'affichage, ladite hauteur H étant définie selon l'axe perpendiculaire audit axe optique.

Selon un mode de réalisation de l'invention, l'écran est un écran de 14 cm de haut, qui est donc décalé de 7 cm perpendiculairement à l'axe optique du miroir sphérique 24.

En outre, le miroir sphérique 24 est pivoté autour du centre du rayon de courbure C d'un angle prédéterminé et l'écran 23 d'affichage est incliné par rapport au miroir sphérique de telle sorte que la normale au centre de l'écran est perpendiculaire au plan tangent du miroir sphérique 24, de manière à compenser un effet de trapèze de l'image projetée introduit par le décalage de l'écran 23 d'affichage par rapport à l'axe optique 20 du miroir sphérique.

Ce pivotement du miroir sphérique se traduit par exemple par un avancement du miroir sphérique 24 vers la paroi avant 11 du boitier 10 selon le plan de la courbure du miroir. Cet avancement est par exemple de 7cm pour un miroir de 30cm de focale.

Selon le mode de réalisation de la figure 1, l'angle du miroir semi-réfléchissant est légèrement différent de 45 degrés pour que l'image aérienne et dématérialisée soit bien verticale. L'homme du métier pourra sans difficultés faire les tests de réglage pour obtenir l'effet souhaité en fonction des dispositifs optiques utilisés.

Selon le mode de réalisation de la figure 1, le dispositif comprend un dispositif de pré-compensation des distorsions de l'image plate affichée par l'écran 23 d'affichage de sorte que l'image projetée, après réflexion par le miroir sphérique 24 retrouve une géométrie conforme à la géométrie originale de l'image auto stéréoscopique.

Si l'on considère un repère d'axes x, y, z au niveau de l'image projetée, le dispositif de pré-compensation comprend par exemple un module de traitement d'images pour compenser les déformations en x et en y.

Le dispositif de pré-compensation pour l'axe z est formé par le réseau de lenticules cylindriques de l'écran 23 d'affichage dans lequel un pas du réseau a été réduit par rapport au pas optimal permettant une observation à une distance nominale prédéterminée des images auto-stéréoscopiques en l'absence du miroir sphérique.

En d'autres termes, le réseau de lenticules cylindriques de l'écran 23 présente un pas réduit par rapport au pas optimal permettant une observation à une distance nominale prédéterminée des images auto-stéréoscopiques en l'absence du miroir sphérique. Par exemple, si l'on considère un écran pour un usage à 80 cm, et un miroir sphérique de 30 cm de focale, le réseau lenticulaire doit idéalement correspondre au réseau lenticulaire qui aurait été nécessaire pour une observation à 20 cm.

Sur la figure 1, l'image source affichée par l'écran 23 est schématiquement représentée par la référence 31. L'image virtuelle projetée à l'extérieur du boitier 10 est schématiquement représentée par la référence 32. L'image retour de l'image source 31 est schématiquement représentée par la référence 33.

Les traits en tirets représentent les trajets des rayons lumineux de l'image source 31 vers le plan de l'image 32 aérienne et dématérialisée. Les traits en pointillés représentent les trajets des rayons lumineux qui forment l'image retour 33. Ainsi, si l'on considère le rayon 41 émis par une extrémité de l'image source 31, il traverse d'abord le miroir semi-réfléchissant 22 par sa face arrière non réfléchissante. Le rayon est réfléchi par le miroir sphérique 24. Une partie de ce rayon lumineux est ensuite réfléchie par le miroir semi-transparent 22 pour former le rayon 41a en direction de la fenêtre d'observation 15 pour former l'image 32 aérienne et dématérialisée. La partie du rayon lumineux non réfléchie traverse le miroir 22 semi-réfléchissant pour former le rayon 41b qui forme l'image retour 33.

Les rayons émis par l'autre extrémité de l'image source 31 et représentés sur la figure 1 sont issus du centre du rayon de courbure du miroir sphérique de sorte que la partie du rayonnement formant l'image retour coïncide avec la direction de l'émission du rayonnement de l'image source.

Le dispositif selon le mode de réalisation des figures comprend également un capteur 40 de détection et de reconnaissance de mouvements d'un observateur monté sur la paroi avant 11 dudit boitier 10 sous la fenêtre d'observation 15.

Ce capteur est par exemple un capteur Leap Motion® configuré pour pouvoir détecter le mouvement des mains ou d'un objet agité devant le capteur. Ce capteur est relié à une unité de traitement et au capteur 23 d'affichage de manière à pouvoir interagir avec l'image. Cette interaction avec l'image détectée par le capteur et interprétée par l'unité de traitement peut par exemple servir à contrôler tous types d'équipements, par exemple situé dans une voiture, un cockpit d'avion, une salle d'opération médicale, et reliés à l'unité de traitement par tous types de moyens. Ainsi, en fonction des zones de l'image aérienne et dématérialisée que l'observateur touche virtuellement, les équipements peuvent être actionnés, commandés ou réagir suivant les paramétrages préalablement effectués. Le capteur peut également être relié à l'écran 23 pour que les interactions avec l'image virtuelle consistent à modifier l'affichage de l'image, par exemple pour la faire pivoter dans tous les sens souhaités.

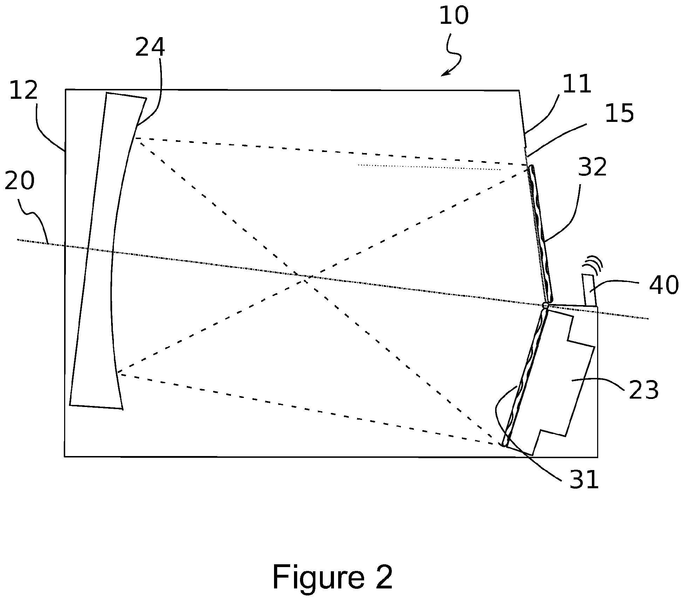

La figure 2 représente un autre mode de réalisation selon l'invention. Selon ce mode de réalisation, le système optique comprend uniquement un miroir sphérique concave et un écran d'affichage. Le miroir sphérique est agencé au niveau de la paroi arrière du boitier, et l'écran est agencé au niveau de la paroi avant du boitier, en symétrie de la fenêtre d'observation par rapport à l'axe optique dudit miroir sphérique.

Ainsi, selon ce mode de réalisation, l'observateur visualise directement l'image retour de l'image source à travers la fenêtre d'observation. Cette image retour correspond à 100% de la lumière réfléchie par le miroir sphérique étant donné que contrairement au mode de réalisation de la figure 1, il n'y a pas de miroir semi-réfléchissant qui dévie une partie de la lumière. Par ailleurs, une symétrie droite/gauche est appliquée aux images affichées comme dans l'observation par un seul miroir plan.

A l'instar du mode de réalisation de la figure 1, l'écran est incliné par rapport au miroir sphérique de telle sorte que la normale au centre de l'écran est perpendiculaire au plan tangent du miroir sphérique 24, de manière à compenser un effet de trapèze de l'image projetée introduit par le décalage de l'écran 23 d'affichage par rapport à l'axe optique du miroir sphérique.

Un dispositif selon l'invention ne se limite pas uniquement aux modes de réalisation décrits et illustrés sur les figures. En particulier, selon d'autres modes de réalisation, le système optique peut comprendre d'autres éléments optiques agencés les uns par rapport aux autres pour pouvoir amener l'image aérienne dématérialisée vers une fenêtre d'observation aménagée ailleurs sur la boite.

Un dispositif selon l'invention peut également être utilisé avec un objet réel même si son objet principal est d'être adapté aux images numériques, et notamment aux images autostéréoscopiques.

## Revendications

1. Dispositif de projection aérienne et dématérialisée d'une image numérique (31) autostéréoscopique comprenant :
- un boitier (10) comprenant une paroi avant (11), une paroi arrière (12), reliées l'une à l'autre au moins par une paroi supérieure (13) et une paroi inférieure (14), ladite paroi avant (11) comprenant une ouverture formant une fenêtre d'observation (15) d'une image aérienne et dématérialisée (32) de ladite image numérique (31) auto stéréo scopique,
- un système optique comprenant au moins un miroir sphérique (24) concave présentant un axe optique (20), une focale F, un centre de rayon de courbure C situé sur ledit axe optique, ledit système optique étant agencé dans ledit boitier (10) de sorte qu'il puisse orienter au moins une partie de la lumière incidente reçue vers ladite fenêtre d'observation (15) pour y former une image aérienne et dématérialisée (32) de l'image numérique (31) autostéréoscopique,
- un écran (23) d'affichage d'images autostéréoscopiques à N points de vues surmonté d'un réseau de lenticules cylindriques formant un composant optique sélecteur des points de vues de ladite image numérique (31) autostéréoscopique à projeter, logé dans ledit boitier (10) en regard dudit miroir sphérique (24) à une distance sensiblement égale au double de la focale F, et écarté dudit axe optique (20) dudit miroir sphérique (24), perpendiculairement à cet axe optique (20) d'une distance au moins égale à la demie-hauteur de l'écran (23) d'affichage, ladite hauteur (H) étant définie selon l'axe perpendiculaire audit axe optique (20).

2. Dispositif de projection selon la revendications 1, **caractérisé en ce que** ledit miroir sphérique (24) est pivoté autour dudit centre du rayon de courbure C d'un angle prédéterminé et **en ce que** ledit écran (23) d'affichage est incliné par rapport au miroir sphérique (24) de telle sorte que la normale au centre de l'écran est perpendiculaire au plan tangent dudit miroir sphérique (24), de manière à compenser un effet de trapèze de l'image projetée introduit par le décalage dudit écran d'affichage par rapport à l'axe optique du miroir sphérique.

3. Dispositif selon l'une des revendications 1 ou 2, **caractérisé en ce qu'**il comprend au moins un capteur (40) de détection et de reconnaissance de mouvements d'un observateur monté sur ladite paroi avant (11) ou supérieure (13) dudit boitier (10) au voisinage de ladite fenêtre d'observation (15) et une unité de traitement reliée audit capteur (40) et/ou audit écran (23) d'affichage de sorte que des mouvements de l'observateur permettent la commande de l'écran (23) d'affichage pour modifier l'image projetée, donnant ainsi à l'observateur l'illusion de manipuler ladite image projetée et/ou permettent la commande d'équipements annexes reliés à l'unité de traitement, ladite image aérienne et dématérialisée (32) formant ainsi une interface de commande de ces équipements annexes.

4. Dispositif selon l'une des revendications 1 à 3, **caractérisé en ce que** ledit miroir sphérique (24) est agencé au niveau de la paroi arrière (12) du boitier, et **en ce que** ledit écran (23) est agencé au niveau de ladite fenêtre d'observation (15) ménagée dans ladite paroi avant (11) dudit boitier, en symétrie de ladite fenêtre d'observation (15) par rapport à l'axe optique (20) dudit miroir sphérique, de sorte que l'image de l'écran réfléchie par ledit miroir sphérique forme directement l'image flottante et dématérialisée (32) de l'image à travers la fenêtre d'observation (15).

5. Dispositif selon l'une des revendications 1 à 3, **caractérisé en ce que** ledit miroir sphérique (24) est agencé au niveau de ladite paroi supérieure (13) dudit boitier, ledit écran est agencé au niveau de ladite paroi inférieure (14) dudit boitier, et **en ce que** ledit système optique comprend en outre un miroir semi-réfléchissant (22) agencé incliné sur le chemin optique reliant ledit écran (23) et ledit miroir sphérique (24) au niveau de la fenêtre d'observation de sorte que l'image affichée par ledit écran apparaît, après une transmission (15) par le miroir semi-réfléchissant (22), une réflexion sur le miroir sphérique (24) et une réflexion sur le miroir semi-réfléchissant (22), dématérialisée et flottante à travers la fenêtre d'observation (15) pour un observateur.

6. Dispositif selon l'une des revendications 1 à 5, **caractérisé en ce que** ladite ouverture ménagée dans ladite paroi avant s'étend dans un plan formant un angle de l'ordre de 80 degrés par rapport à l'axe du chemin optique de sortie de l'image projetée du boitier.

7. Dispositif selon l'une des revendications 1 à 6, **caractérisé en ce qu'**il comprend en outre une vitre antireflet s'étendant dans ladite fenêtre d'observation (15).

8. Dispositif selon l'une des revendications 1 à 7, **caractérisé en ce qu'**il comprend en outre un dispositif de pré-compensation des distorsions de l'image affichée par ledit écran d'affichage de sorte que l'image projetée, après réflexion par ledit miroir sphérique qui forme un dispositif optique convergent, retrouve une géométrie conforme à la géométrie originale de l'image autostéréoscopique.

9. Dispositif selon la revendication 8, **caractérisé en ce que** ladite image projetée s'étendant dans un repère prédéterminé d'axes x, y, z, ledit dispositif de pré-compensation est formé, dans la direction d'axe z, par ledit réseau de lenticules cylindriques dudit écran (23) d'affichage d'images autostéréoscopiques dans lequel un pas dudit réseau a été réduit par rapport au pas optimal permettant une observation à une distance nominale prédéterminée desdits images autostéréoscopiques en l'absence du miroir sphérique.

10. Dispositif selon l'une des revendications 8 ou 9, **caractérisé en ce que** ladite image projetée s'étendant dans un repère prédéterminé d'axes x, y, z, ladite image numérique auto-stéréoscopique affichée sur ledit écran (23) d'affichage est pré-déformée numériquement pour compenser les déformations géométriques selon les axes x et y de l'image projetée liées au décalage dudit écran d'affichage par rapport à l'axe optique dudit miroir sphérique (23) et à la présence d'un miroir sphérique concave formant un système optique convergent soumis aux règles de la perspective conique

11. Dispositif selon l'une des revendications 1 à 10, **caractérisé en ce que** ledit écran d'affichage est configuré pour pouvoir afficher une séquence d'images numériques formant un contenu vidéo.

## Patentansprüche

1. Vorrichtung für die virtuelle und Luft-Projektion eines autostereoskopischen digitalen Bildes (31) welche umfasst:
- ein Gehäuse (10) mit einer Vorderwand (11), einer Rückwand (12), die miteinander durch mindestens eine obere Wand (13) und eine untere Wand (14) verbunden sind, worin die Vorderwand (11) eine Öffnung aufweist, die ein Sichtfenster (15) für ein virtuelles und LuftBild (32) des digitalen autostereoskopischen Bildes (31) ausbildet,
- ein optisches System, das mindestens einen konkaven sphärischen Spiegel (24) umfasst, der eine optische Achse (20), eine Brennweite F und einen Mittelpunkt des Krümmungsradius C aufweist, der sich auf der optischen Achse befindet, worin das optische System in dem Gehäuse (10) derart angeordnet ist, dass es mindestens einen Teil des empfangenen einfallenden Lichts auf das Sichtfenster (15) richten kann, um ein virtuelles un Luft-Bild (32) des digitalen autostereoskopischen Bildes (31) zu erzeugen,
- einen Bildschirm (23) zur Anzeige von autostereoskopischen Bildern mit N Blickpunkten, der mit einem zylindrischen Linsenfeld überlagert ist, das eine optische Komponente zur Auswahl von Blickpunkten des zu projizierenden digitalen autostereoskopischen Bildes (31) bildet und in dem Gehäuse (10) gegenüber dem sphärischen Spiegel (24) in einem Abstand vorgesehen ist, der im Wesentlichen gleich dem Doppelten der Brennweite F ist, und von der optischen Achse (20) des sphärischen Spiegels (24) senkrecht zu dieser optischen Achse (20) um einen Abstand von mindestens der halben Höhe des Anzeigeschirms (23) beabstandet ist, worin die Höhe (H) entsprechend der Achse senkrecht zu der optischen Achse (20) definiert ist.

2. Projektionsvorrichtung nach Anspruch 1, **dadurch gekennzeichnet, dass** der sphärische Spiegel (24) um den Mittelpunkt des Krümmungsradius C um einen bestimmten Winkel geschwenkt wird und dass der Anzeigeschirm (23) in Bezug auf den sphärischen Spiegel (24) so gekippt wird, dass die Normale in der Mitte des Schirms senkrecht zur Tangentialebene des sphärischen Spiegels (24) liegt, um einen Trapezeffekt des projizierten Bildes zu kompensieren, der durch die Verschiebung des Anzeigeschirms in Bezug auf die optische Achse des sphärischen Spiegels entsteht.

3. Vorrichtung nach einem der Ansprüche 1 oder 2, **dadurch gekennzeichnet, dass** sie umfasst, mindestens einen Sensor (40) zur Erfassung und Erkennung von Bewegungen des Betrachters, der an der Vorderwand (11) oder der oberen Wand (13) des Gehäuses (10) in der Nähe des Sichtfensters (15) angebracht ist, und eine Verarbeitungseinheit, die mit dem Sensor (40) und/oder dem Anzeigebildschirm (23) verbunden ist, so dass die Bewegungen des Betrachters den Anzeigebildschirm (23) steuern können, um das projizierte Bild zu modifizieren, wodurch dem Betrachter die Illusion vermittelt wird, das projizierte Bild zu manipulieren, und/oder Hilfsgeräte steuern können, die mit der Verarbeitungseinheit verbunden sind, wobei das Luftbild und das virtuelle Bild (32) dadurch eine Steuerschnittstelle für diese Hilfsgeräte bilden.

4. Vorrichtung nach einem der Ansprüche 1 bis 3, **dadurch gekennzeichnet, dass** der sphärische Spiegel (24) an der Rückwand (12) des Gehäuses angeordnet ist und dass der Bildschirm (23) an dem in der Vorderwand (11) des Gehäuses ausgebildeten Sichtfenster (15) symmetrisch zu dem Sichtfenster (15) in Bezug auf die optische Achse (20) des sphärischen Spiegels angeordnet ist, so dass das von dem sphärischen Spiegel reflektierte Bild des Bildschirms direkt das schwebende und virtuelle Bild (32) des Bildes durch das Sichtfenster (15) bildet.

5. Vorrichtung nach einem der Ansprüche 1 bis 3, **dadurch gekennzeichnet, dass** der sphärische Spiegel (24) an der oberen Wand (13) des Gehäuses angeordnet ist, der Bildschirm an der unteren Wand (14) des Gehäuses angeordnet ist, und dass das optische System ferner einen geneigten halbreflektierenden Spiegel (22) umfasst, der auf dem optischen Pfad angeordnet ist, der den Bildschirm (23) und den sphärischen Spiegel (24) am Sichtfenster verbindet, so dass das von dem Bildschirm angezeigte Bild nach der Übertragung (15) durch den halbreflektierenden Spiegel (22), der Reflexion an dem kugelförmigen Spiegel (24) und der Reflexion an dem halbreflektierenden Spiegel (22) für einen Betrachter virtuell und schwebend durch das Sichtfenster (15) erscheint.

6. Vorrichtung nach einem der Ansprüche 1 bis 5, **dadurch gekennzeichnet, dass** sich die Öffnung in der Vorderwand in einer Ebene erstreckt, die einen Winkel von etwa 80 Grad zur Achse des optischen Austrittswegs des vom Gehäuse projizierten Bildes bildet.

7. Vorrichtung nach einem der Ansprüche 1 bis 6, **dadurch gekennzeichnet, dass** sie ferner eine sich über das Sichtfenster (15) erstreckende antireflektierende Glasscheibe aufweist.

8. Vorrichtung nach einem der Ansprüche 1 bis 7, **dadurch gekennzeichnet, dass** sie ferner eine Vorkompensationsvorrichtung für Verzerrungen des von dem Bildschirm angezeigten Bildes umfasst, so dass das projizierte Bild nach der Reflexion durch den sphärischen Spiegel, der eine konvergente optische Vorrichtung bildet, wieder eine Geometrie erhält, die mit der ursprünglichen Geometrie des autostereoskopischen Bildes übereinstimmt.

9. Vorrichtung nach Anspruch 8, **dadurch gekennzeichnet, dass** das projizierte Bild sich in einem bestimmten Bezugsrahmen auf der x-, y- und z-Achse erstreckt, worin die Vorkompensationsvorrichtung in Richtung der z-Achse durch das zylindrische Linsenfeld des Bildschirms (23) gebildet wird, um autostereoskopische Bilder anzuzeigen, bei denen ein Abstand des Feldes in Bezug auf den optimalen Abstand verringert wurde, was es ermöglicht, die autostereoskopischen Bilder in einem vorbestimmten Nennabstand in Abwesenheit des sphärischen Spiegels zu betrachten.

10. Vorrichtung nach einem der Ansprüche 8 oder 9, **dadurch gekennzeichnet, dass** sich das projizierte Bild in einem bestimmten Bezugsrahmen auf der x-, y- und z-Achse erstreckt, das auf dem Bildschirm (23) angezeigte autostereoskopische digitale Bild digital vorverzerrt ist, um die geometrischen Verzerrungen des projizierten Bildes entlang der x- und y-Achse zu kompensieren, die mit der Verschiebung des Bildschirms gegenüber der optischen Achse des sphärischen Spiegels (23) und mit dem Vorhandensein eines konkaven sphärischen Spiegels zusammenhängen, der ein konvergentes optisches System bildet, das den Regeln der konischen Perspektive unterliegt.

11. Vorrichtung nach einem der Ansprüche 1 bis 10, **dadurch gekennzeichnet, dass** der Anzeigeschirm derart konfiguriert ist, dass er eine Folge von digitalen Bildern anzeigen kann, die einen Videoinhalt bilden.

## Claims

1. Device for the aerial and virtual projection of an auto stereoscopic digital image (31) comprising:
- a case (10) comprising a front wall (11), a rear wall (12), connected to each other by at least an upper wall (13) and a lower wall (14), said front wall (11) comprising an opening forming a viewing window (15) for an aerial and virtual image (32) of said digital auto stereoscopic image (31),
- an optical system comprising at least one concave spherical mirror (24) having an optical axis (20), a focal length F, a center of the radius of curvature C located on said optical axis, said optical system being arranged in said case (10) such that it can direct at least part of the received incident light towards said viewing window (15) to form an aerial and virtual image (32) of the digital auto stereoscopic image (31),
- a screen (23) for displaying autostereoscopic images with N viewpoints, overlaid with a cylindrical lens array forming an optical component for selecting viewpoints of said digital autostereoscopic image (31) to be projected, housed in said case (10) opposite said spherical mirror (24) at a distance substantially equal to twice the focal length F, and distanced from said optical axis (20) of said spherical mirror (24), perpendicularly to this optical axis (20) by a distance of at least half the height of the display screen (23), said height (H) being defined according to the axis perpendicular to said optical axis (20).

2. Projection device according to claim 1, **characterized in that** said spherical mirror (24) is pivoted about said center of the radius of curvature C by a predetermined angle and **in that** said display screen (23) is tilted relative to the spherical mirror (24) such that the normal in the center of the screen is perpendicular to the tangent plane of said spherical mirror (24), so as to compensate for a trapezoid effect of the projected image introduced by offsetting said display screen relative to the optical axis of the spherical mirror.

3. Device according to one of claims 1 or 2, **characterized in that** it comprises at least one sensor (40) for detecting and recognizing the viewer's movements, which sensor is mounted on said front wall (11) or upper wall (13) of said case (10) in the vicinity of said viewing window (15), and a processing unit connected to said sensor (40) and/or said display screen (23) so that the viewer's movements can control the display screen (23) to modify the projected image, thus giving the viewer the illusion of manipulating said projected image, and/or can control ancillary equipment connected to the processing unit, said aerial and virtual image (32) thereby forming a control interface for this ancillary equipment.

4. Device according to one of claims 1 to 3, **characterized in that** said spherical mirror (24) is arranged at the rear wall (12) of the case, and **in that** said screen (23) is arranged at said viewing window (15) formed in said front wall (11) of said case, in symmetry with said viewing window (15) relative to the optical axis (20) of said spherical mirror, such that the image of the screen reflected by said spherical mirror directly forms the floating and virtual image (32) of the image through the viewing window (15).

5. Device according to one of claims 1 to 3, **characterized in that** said spherical mirror (24) is arranged at said upper wall (13) of said case, said screen is arranged at said lower wall (14) of said case, and **in that** said optical system further comprises a tilted semi-reflective mirror (22) arranged on the optical path linking said screen (23) and said spherical mirror (24) at the viewing window, such that the image displayed by said screen, after transmission (15) by the semi-reflective mirror (22), reflection on the spherical mirror (24) and reflection on the semi-reflective mirror (22), appears virtual and floating through the viewing window (15) to a viewer.

6. Device according to one of claims 1 to 5, **characterized in that** said opening in said front wall extends in a plane forming an angle of approximately 80 degrees relative to the axis of the optical output path of the image projected from the case.

7. Device according to one of claims 1 to 6, **characterized in that** it further comprises an anti-reflective glass pane extending across said viewing window (15).

8. Device according to one of claims 1 to 7, **characterized in that** it further comprises a pre-compensation device for distortions of the image displayed by said display screen, such that the projected image, after reflection by said spherical mirror forming a convergent optical device, regains a geometry consistent with the original geometry of the autostereoscopic image.

9. Device according to claim 8, **characterized in that**, said projected image extending in a predetermined frame of reference on the x-, y- and z-axes, said pre-compensation device is formed, in the z-axis direction, by said cylindrical lens array of said screen (23) for displaying autostereoscopic images in which a pitch of said array has been reduced relative to the optimal pitch, allowing said autostereoscopic images to be viewed at a predetermined nominal distance in the absence of the spherical mirror.

10. Device according to one of claims 8 or 9, **characterized in that**, said projected image extending in a predetermined frame of reference on the x-, y- and z-axes, said autostereoscopic digital image displayed on said display screen (23) is digitally pre-distorted to compensate for the geometric distortions of the projected image along the x- and y-axes linked to offsetting said display screen relative to the optical axis of said spherical mirror (23) and to the presence of a concave spherical mirror forming a convergent optical system subject to conic perspective rules.

11. Device according to one of claims 1 to 10, **characterized in that** said display screen is configured to be able to display a sequence of digital images forming video content.
